# EUROPEAN PATENT APPLICATION

(11) **EP 4 614 002 A1**
(43) Date of publication of application: **10.09.2025**
(21) Application number: 23907559.1
(22) Date of filing: 13.12.2023
(51) Int. Cl.: F03D 80/00, F03D 13/25, B63B 21/50, B63B 35/44

(54) **MOORING APPARATUS, FLOATING-TYPE OFFSHORE WIND POWER GENERATOR AND CONTROL METHOD THEREFOR**

(30) Priority: 19.12.2022 KR 20220178658
(71) Applicant: POSCO Co., Ltd, Pohang-si, Gyeongsangbuk-do 37859 (KR)
(72) Inventor: KIM, Eungsoo, Incheon 22002 (KR); KIM, Shinyoung, Suwon-si Gyeonggi-do 16315 (KR); NOH, Myunghyun, Incheon 21585 (KR); PARK, Kyusik, Incheon 21986 (KR)
(74) Representative: Nederlandsch Octrooibureau
(86) International application number: PCT/KR2023/020517
(87) International publication number: WO 2024/136273

(57) **Abstract**

A mooring apparatus of a floating-type structure according to the present disclosure comprises: a chain wheel on which a mooring chain is wound; a brake band surrounding the outer circumference of the chain wheel; a brake actuator which provides a pulling force to the brake band such that the brake band brakes by compressing the outer circumference of the chain wheel; a tension detection portion that measures tension applied to the brake band; and a controller which controls the brake actuator to reduce the pulling force of pulling the brake band when a measured value measured by the tension detection portion exceeds a set value.

## Description

### [Technical Field]

The present disclosure relates to a mooring apparatus for a floating structure installed offshore, a floating-type offshore wind power generator, and a method of controlling the same.

### [Background Art]

Wind power generation is a technology that converts wind energy into mechanical energy to produce electricity, and is gaining attention as a clean energy source for reducing greenhouse gases. Wind power generators are mainly installed on land, but such land-based wind power generators have issues such as noise and site acquisition. Accordingly, there is a growing trend toward installing wind power generators offshore

Among wind power generators installed offshore, there is a floating-type wind power generator that is installed to float at sea. Such a floating-type wind power generator has a benefit of being installed without being affected by the depth of the sea. In addition, it has a benefit of being installed in a deep-sea area to enhance power generation efficiency by utilizing strong offshore winds.

A floating-type wind power generator includes power generation facility installed on an upper side and a floating structure disposed on a lower side to support the facility. The floating structure is largely divided into a floating body that supports an electric generator and a tower on the upper side through buoyancy, and the like, and a mooring system that prevents the tower and the electric generator from leaving a designated position and maintains stable movement of the upper side structure.

### [Disclosure]

### [Technical Problem]

One aspect of the present disclosure discloses a mooring apparatus, a floating-type offshore wind power generator, and a method of controlling the same that enable cost reduction of a mooring system by reducing the design tension of a mooring chain.

### [Technical Solution]

According to an embodiment of the disclosure, there is provided a mooring apparatus for a floating structure, including: a chain wheel on which a mooring chain is wound; a brake band surrounding an outer circumference of the chain wheel; a brake actuator configured to provide a pulling force to the brake band such that the brake band presses the outer circumference of the chain wheel to perform braking; a tension detection unit configured to measure a tension applied to the brake band; a control unit configured to control the brake actuator to reduce the pulling force for pulling the brake band when a value measured by the tension detection unit exceeds a set value.

The tension detection unit may include a load cell connected to one end of the brake band.

The brake actuator may be connected to the other end of the brake band.

The tension detection unit may include a sensor bracket connected to the brake band, and the load cell may be configured to measure a load transmitted to the sensor bracket.

The brake actuator may include a brake cylinder having a rod configured to move forward and backward, and a plurality of link members having one end connected to the rod of the brake cylinder and the other end connected to the brake band, the plurality of link members configured to pull or release the brake band according to the forward and backward movement of the rod.

The mooring apparatus may further include a mooring chain unwound length detection unit configured to measure a degree to which the mooring chain may be wound or unwound.

The mooring chain unwound length detection unit may include an encoder configured to measure a rotation angle of the chain wheel, and the control unit may be configured to determine an unwound length of the mooring chain based on a value measured by the encoder.

The floating structure may include at least one outer column, and a chain wheel bracket coupled to a side wall of the at least one outer column, and the chain wheel may be rotatably installed on the chain wheel bracket.

The mooring apparatus may further include a tilt detection unit configured to measure a tilt of the chain wheel bracket.

The mooring apparatus may further include a brake band guide member extending from the chain wheel bracket and configured to support a side of the brake band opposite to a side of the brake band that is in contact with the chain wheel to prevent the brake band from being separated from the chain wheel.

The mooring chain may include a first portion extending longitudinally from a position adjacent to the at least one outer column, and a second portion wound around the chain wheel and connected to an anchor.

The mooring apparatus may further include a mooring chain return actuator configured to return the mooring chain to an original position in response to unwinding of the mooring chain.

The mooring chain return actuator may be configured to grip the first portion of the mooring chain and move the mooring chain downward.

The mooring chain return actuator may include a return cylinder, and a clamp installed at an end of a rod of the return cylinder to selectively grip the mooring chain.

The at least one column may be provided with a chain guide member configured to space the first portion of the mooring chain from the at least one column.

The mooring chain may be provided at a lower end thereof with a chain stopper, and the at least one outer column may be provided with a stopper bracket configured to interfere with the chain stopper.

The brake actuator may be positioned on an upper side of the chain wheel bracket, the brake band may extend transversely from a sensor bracket having a load cell, which may be installed on the at least one outer column, and may be wound around an outer circumference of the chain wheel, and then extend upward to be connected to the brake actuator, and the brake actuator may be configured to suppress rotation of the chain wheel by lifting the brake band upward.

According to an embodiment of the disclosure, there is provided a floating-type offshore wind power generator including the mooring apparatus described above.

According to an embodiment of the disclosure, there is provided a method of controlling a mooring apparatus for a floating structure, which includes a brake band connected at one end thereof to a load cell and at the other end thereof to a braking actuator and pulled to provide a chain wheel with a braking force by surrounding an outer circumference of the chain wheel on which a mooring chain is wound, the method including: measuring, by the load cell, a tension applied to the brake band; and when a value measured by the load cell exceeds a set value, releasing a pulling force of the brake band.

The method may further include: measuring a rotation angle of the chain wheel, determining an unwound length of the mooring chain based on the measured rotation angle; and pulling the mooring chain in a direction opposite to an unwound direction of the mooring chain by the unwound length of the mooring chain to return the mooring chain.

### [Advantageous Effects]

According to an embodiment of the present disclosure, the maximum tension is reduced by adjusting the length of a mooring chain, thereby simplifying the structure of a mooring system and reducing the overall cost.

### [Description of Drawings]

FIG. 1 is a perspective view illustrating a floating-type offshore wind generator according to an embodiment of the present disclosure.
FIG. 2 is a block diagram illustrating a mooring apparatus of a floating structure according to an embodiment of the present disclosure.
FIG. 3 is a diagram illustrating a mooring apparatus installed on an outer column according to an embodiment of the present disclosure.
FIG. 4 is a diagram illustrating an operation state of a chain stopper provided on a mooring chain according to an embodiment of the present disclosure.
FIG. 5 is a diagram illustrating a part of a mooring apparatus according to an embodiment of the present disclosure.
FIG. 6 is a diagram illustrating a mooring chain return actuator according to an embodiment of the present disclosure.
FIG. 7 is a diagram illustrating an operation state of a mooring chain return actuator according to an embodiment of the present disclosure.

### [Modes of the Invention]

Although the present invention has been described with reference to the embodiments, a person of ordinary skill in the art should appreciate that various modifications, equivalents, and other embodiments are possible without departing from the scope and spirit of the present invention. The scope of the present invention is not defined by the above embodiments but by the appended claims of the present invention, and the present invention is to cover all modifications, equivalents, and alternatives falling within the spirit and scope of the present invention

The singular forms "a," "an" and "the" are intended to include the plural forms as well, unless the context clearly indicates otherwise. Further, in the accompanying drawings, the size and relative sizes of elements may be exaggerated for clarity and/or descriptive purposes.

In this disclosure, the terms "including", "having", and the like are used to specify features, numbers, steps, operations, elements, components, or combinations thereof, but do not preclude the presence or addition of one or more of the features, elements, steps, operations, elements, components, or combinations thereof.

Terms such as "1st", "2nd", "primary", or "secondary" may be used simply to distinguish a component from other components, without limiting the order of arrangement among components, the order of manufacturing, or the importance thereof.

The singular forms "a," "an" and "the" are intended to include the plural forms as well, unless the context clearly indicates otherwise.

The term of "and / or" includes a plurality of combinations of relevant items or any one item among a plurality of relevant items.

Hereinafter, a preferred embodiment according to the present disclosure will be described in detail with reference to the attached drawings.

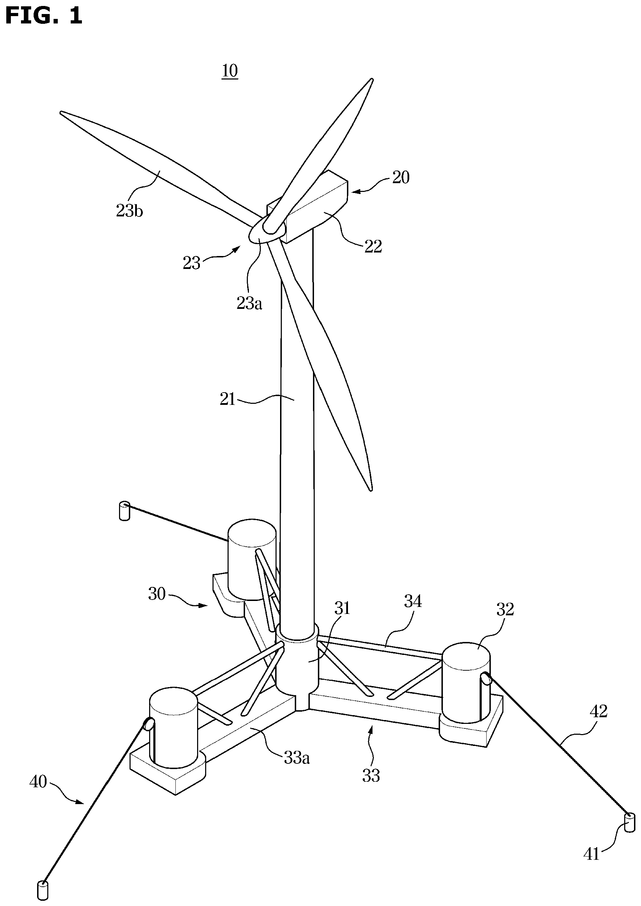

FIG. 1 is a perspective view illustrating a floating-type offshore wind generator according to an embodiment of the present disclosure.

Referring to FIG. 1, a floating-type offshore wind power generator 10 includes a power generation facility 20, a floating structure 30 that supports the power generation facility 20 while floating on the sea, and a mooring apparatus 40.

The power generation facility 20 may include a tower 21, a nacelle 22 installed on an upper side of the tower 21, and a rotor 23 connected to a rotation shaft of the nacelle 22. The nacelle 22 is a device that converts wind power into mechanical rotational energy, and may have an electric generator installed therein.

The rotor 23 may include a hub 23a rotatably coupled to the electric generator, and a plurality of blades 23b coupled to the hub 23a and extending in a radial direction. The electric generator may be connected to a power grid via an underwater power cable.

The power generation facility 20 according to the disclosure is illustrated as a horizontal shaft power generation facility having a rotation shaft parallel to the sea surface, but it may be a vertical shaft power generation facility having a rotation shaft perpendicular to the sea surface.

The floating structure 30 may include a central column 31 supporting the tower 21, at least one outer column 32 arranged on the outside of the central column 31, and a pontoon 33 connecting the central column 31 to the at least one outer column 32.

The central column 31 may be located at the center of the pontoon 33, and the at least one outer column 32 may be located at the end portions of the pontoon 33.

The central column 31 and the at least one outer column 32 may be configured as a cylindrical floating body. Alternatively, the central column 31 and the at least one outer column 32 may be configured as a floating body having a polygonal cross-section such as a triangle, a square, or a hexagon.

The central column 31 and the at least one outer column 32 may be filled with a buoyant material inside. Alternatively, the central column 31 and the at least one outer column 32 may be filled with a ballast medium for buoyancy adjustment inside.

The pontoon 33 may be configured as a buoyant body connecting the central column 31 and the at least one outer column 32. The pontoon 33 may be filled with a ballast medium inside.

The pontoon 33 may have at least one beam portion 33a extending radially from a portion thereof to which the central column 31 is connected. The at least one outer column 32 may be located at the end of the at least one beam portion 33a. The at least one beam portion 33a may be spaced apart at intervals of 120 degrees along the circumference of the central column 31.

The central column 31, the at least one outer column 32, and the pontoon 33 may be connected to each other through a brace 34.

The mooring apparatus 40 may be configured to moor the floating structure 30 at sea, and may maintain stable movement of the floating structure 30 through a mooring chain 42 connected to an anchor 41 installed on the seabed.

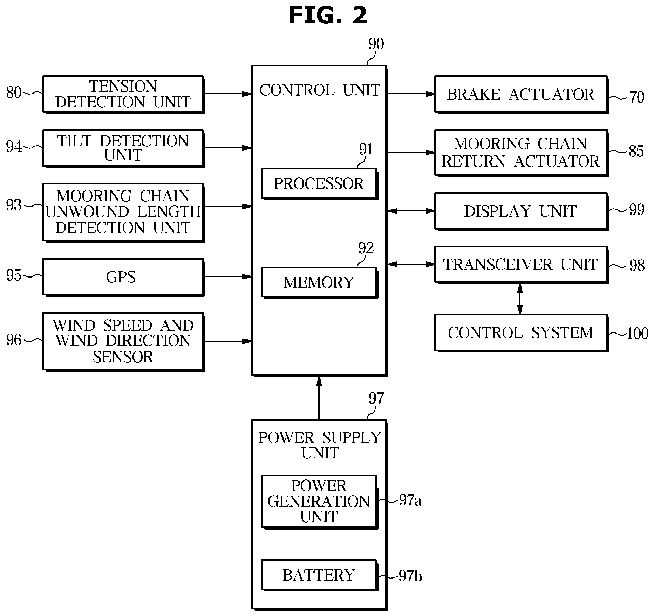

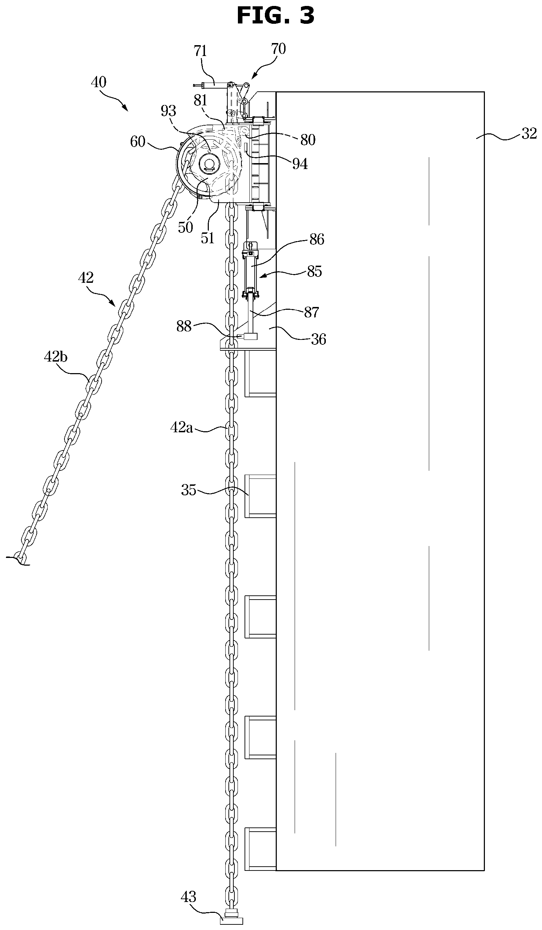

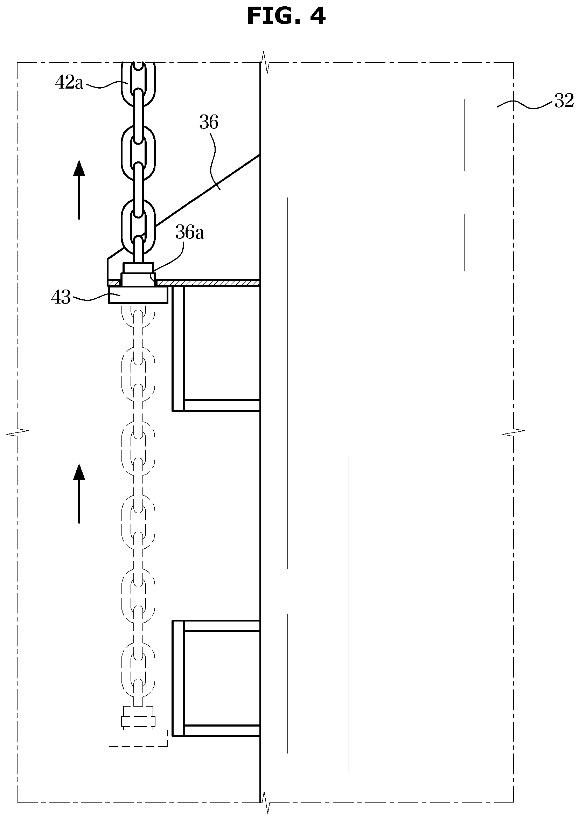

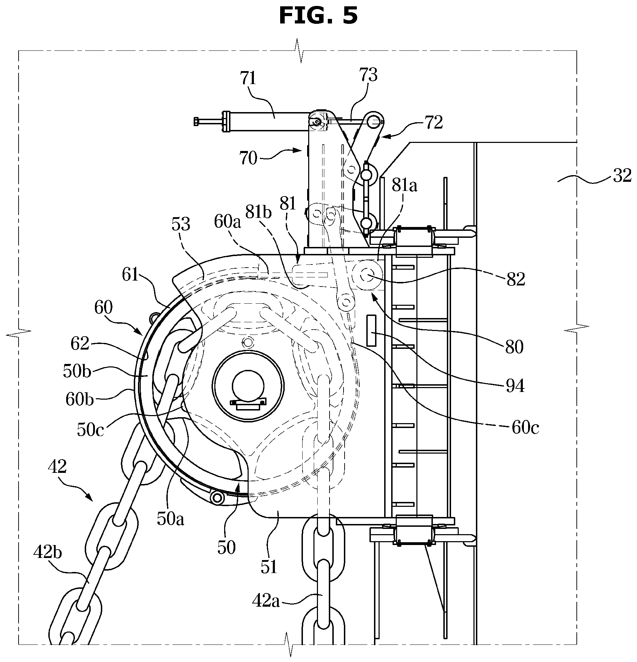

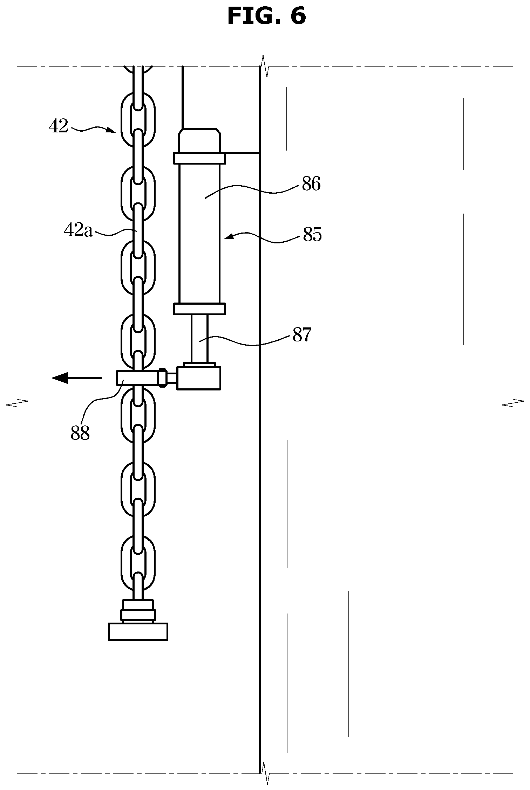

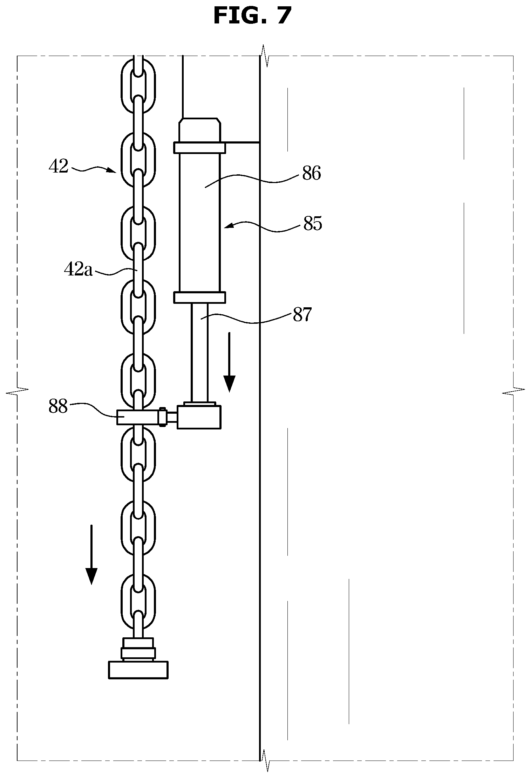

FIG. 2 is a block diagram illustrating a mooring apparatus of a floating structure according to an embodiment of the present disclosure, FIG. 3 is a diagram illustrating a mooring apparatus installed on an outer column according to an embodiment of the present disclosure, FIG. 4 is a diagram illustrating an operation state of a chain stopper provided on a mooring chain according to an embodiment of the present disclosure, FIG. 5 is a diagram illustrating a part of a mooring apparatus according to an embodiment of the present disclosure, FIG. 6 is a diagram illustrating a mooring chain return actuator according to an embodiment of the present disclosure, and FIG. 7 is a diagram illustrating an operation state of a mooring chain return actuator according to an embodiment of the present disclosure.

Referring to FIGS. 2 to 7, the mooring apparatus 40 may include a chain wheel 50 on which a mooring chain 42 is wound; a brake band 60 surrounding an outer circumference of the chain wheel 50; a brake actuator 70 configured to provide a pulling force for the brake band 60 to press the outer circumference of the chain wheel 50 to perform braking; a tension detection unit 80 configured to measure a tension applied to the brake band 60; and a control unit 90 configured to control an operation of the brake actuator 70 based on detection information of the tension detection unit 80.

The mooring chain 42 may include a first portion 42a extending longitudinally from a position adjacent to the at least one outer column 32, and a second portion 42b partially wound around the chain wheel 50 at an upper end of the first portion 42a and then connected to the anchor 41.

The first portion 42a may ensure an extra length that may extend the length of the second portion 42b when a certain tension is applied to the second portion 42b.

The first portion 42a of the mooring chain 42 may be supported by a chain guide member 35 installed on the at least one outer column 32. The chain guide member 35 may space the first portion 42a of the mooring chain 42 from a side of the at least one outer column 32. The chain guide member 35 may prevent the mooring chain 42 and/or the at least one outer column 32 from colliding with each other when moving.

The mooring chain 42 may be provided with a chain stopper 43 at a lower end of the first portion 42a.

The chain stopper 43 may regulate the maximum unwound length of the mooring chain 42. The chain stopper 43 may interfere with a stopper bracket 36 while the first portion 42a moves upward as shown in FIG. 4.

The stopper bracket 36 may have a through hole 36a through which the mooring chain 42 passes. The through hole 36a may have a diameter that allows passage of the mooring chain 42 but restricts passage of the chain stopper 43.

The chain wheel 50 may be rotatably installed on a chain wheel bracket 51 coupled to an upper portion of a side wall of the at least one outer column 32.

The chain wheel 50 may include an inner wheel 50a provided with a concave portion corresponding to a link shape of the mooring chain 42 and an outer wheel 50b on which a brake band 60 is supported. The mooring chain 42 may rotate together with the chain wheel 50 while being seated on the concave portion. That is, the mooring chain 42 may rotate together with the rotation of the chain wheel 50 by a protrusion 50c formed on the inner wheel 50a being caught with a link groove of the mooring chain 42, and the movement of the mooring chain 42 may be restricted when the chain wheel 50 is stopped.

The brake band 60 may be installed to surround the outer circumference of the chain wheel 50. The brake band 60 may be in a form that surrounds the outer circumference of the outer wheel 50b. The brake band 60 may extend from an upper side of the chain wheel 50 transversely and surround a portion of the outer circumference of the chain wheel 50 and then extend upward. The brake band 60 may include a first portion 60a extending transversely from the upper side of the chain wheel 50, a second portion 60b wound around the outer surface of the chain wheel 50, and a third portion 60c extending upward from an end of the second portion 60b. With such a configuration, the brake band 60 may exert high braking force with a small force.

The brake band 60 may include a metal band 61 and a lining 62 attached to the metal band 61. The brake band 60 may restrain the rotation of the chain wheel 50 by compressing the outer circumferential surface of the chain wheel 50 with the lining 62. The chain wheel 50 may be maintained in a stopped state by a frictional force of the brake band 60 while the floating structure 30 is operating in a normal state.

The brake band 60 may have one end connected to a sensor bracket 81 and the other end connected to the brake actuator 70.

The chain wheel bracket 51 may be provided with a brake band guide member 53 installed to prevent the brake band 60 from being separated from the chain wheel 50.

The brake band guide member 53 may extend from an upper side of the chain wheel bracket 51 toward the chain wheel 50. A lower end of the brake band guide member 53 may be supported on an upper surface of the brake band 60. The brake band 60 may be interposed in a space between the chain wheel 50 and the brake band guide member 53.

The brake actuator 70 may provide a braking force by pulling the brake band 60 such that the brake band 60 presses the outer circumferential surface of the chain wheel 50.

The brake actuator 70 may be controlled according to a control signal of the control unit 90.

The brake actuator 70 may be located on the upper side of the chain wheel 50. The brake actuator 70 may be installed on the upper side of the chain wheel bracket 51. The brake actuator 70 may be installed on the upper side of the at least one outer column 32.

The brake actuator 70 may include a brake cylinder 71 and a plurality of link members 72. The brake cylinder 71 may include a hydraulic cylinder having a rod 73 that moves forward and backward according to a signal from the control unit 90.

The plurality of link members 72 may have one end connected to the rod 73 of the brake cylinder 71 and the other end connected to the brake band 60. The plurality of link members 72 may convert the movement caused by the forward and backward movement of the brake cylinder 71 into an up and down movement that pulls or releases the brake band 60.

The tension detection unit 80 may include a sensor bracket 81 and a load cell 82 installed on the sensor bracket 81. The tension detection unit 80 may measure a load applied to the brake band 60 and transmit measured detection information to the control unit 90.

The sensor bracket 81 may include a first member 81a and a second member 81b, and a load cell 82 may be interposed between the first member 81a and the second member 81b.

The first member 81a may be connected to the chain wheel bracket 51, and the second member 81b may be connected to the brake band 60. A load applied to the second member 81b may be measured by the load cell 82, and the measurement value of the load cell 82 may be transmitted to the control unit 90 in real time.

The control unit 90 may include a processor 91 and a memory 92.

The processor 91 may process output data of the tension detection unit 80, and output a control signal for controlling the brake actuator 70 in response to the processing of the output data.

The memory 92 may store programs and data for the operation of the processor 91.

The control unit 90 may control the brake actuator 70 to reduce the pulling force of the brake band 60 when the measured value detected by the tension detection unit 80 exceeds a set value.

Here, the set value may include a critical tension of the mooring chain 42 and may be stored in the memory 92.

The control unit 90 may determine the tension applied to the mooring chain 42 using load information measured by the load cell 82 and braking force information of the chain wheel 50.

Here, the braking force information of the chain wheel 50 may be calculated in advance through a friction coefficient of the brake band 60, a vertical force acting on a contact surface of the brake band 60 and the chain wheel 50, a contact length and a contact area of the brake band 60 and the chain wheel 50, and may be stored in the memory 92.

In addition, the memory 92 may store a lookup table for a change amount in the length of the mooring chain 42 and a change rate in the length of the mooring chain 42, which are associated with a change amount in the tension of the mooring chain 42, calculated through numerical simulation or collected and calculated while being installed offshore.

The control unit 90 may determine a change amount of tension of the mooring chain 42 based on the load information measured by the load cell 82, and when the tension applied to the mooring chain 42 exceeds the critical tension, may obtain a change amount and a change rate in the length of the mooring chain 42 stored in the lookup table, which result in a tension falling below the critical tension, and control the brake actuator 70 to change the length of the mooring chain 42 to correspond to the obtained change amount and the change rate in the length of the mooring chain 42.

The control unit 90 may receive the tension applied to the mooring chain 42 in real time, and determine the fatigue life of the mooring chain 42 based on the received tension change amount. The control unit 90 may use information such as a persistence and a variation of the tension applied to the mooring chain 42 to determine the fatigue life of the mooring chain 42 based on the design criteria of the mooring chain 42, and store the determined information in the memory 92.

The mooring apparatus 40 according to an embodiment of the present disclosure may include a mooring chain unwound length detection unit 93, a tilt detection unit 94, a mooring chain return actuator 85, a global positioning system (GPS) 95, a wind speed and wind direction sensor 96, a power supply unit 97, a transceiver unit 98, a display unit 99, and a control system 100.

The mooring chain unwound length detection unit 93 may measure the degree to which the mooring chain 42 is wound or unwound on the chain wheel 50.

The mooring chain unwound length detection unit 93 may include an encoder that measures the rotation angle of the chain wheel 50. The mooring chain unwound length detection unit 93 may be installed on one side of the chain wheel 50.

Information detected by the mooring chain unwound length detection unit 93 may be transmitted to the control unit 90. The control unit 90 may determine the unwound length of the mooring chain 42 based on the angle information of the chain wheel 50 transmitted from the mooring chain unwound length detection unit 93 and may store the determined unwound length in the memory 92.

The control unit 90 may control the operation of the mooring chain return actuator 85 in response to the unwound length of the mooring chain 42.

The tilt detection unit 94 may detect a tilt of the floating structure 30. The tilt detection unit 94 may include a tilt sensor installed on the chain wheel bracket 51. The tilt sensor may include a gyro sensor or a three-shaft angular velocity sensor. The tilt sensor may be installed on the at least one outer column 32.

The tilt information detected by the tilt detection unit 94 may be transmitted to the control unit 90. The control unit 90 may store the tilt information transmitted from the tilt detection unit 94 in the memory 92.

While exemplary embodiments of the present disclosure have been described above with reference to the accompanying drawings, it will be understood by those of ordinary skill in the art that various modifications and changes can be made without departing from the spirit and scope of the present disclosure as defined by the appended claims.

The control unit 90 may store the tilt of the floating structure 30 and the tension of the mooring chain 42 in the memory 92 to be associated with each other in the form of a database.

The mooring chain return actuator 85 may, when the mooring chain 42 is released from the chain wheel 50 and extended in length, return the mooring chain 42 to its original position.

The mooring chain return actuator 85 may include a return cylinder 86 and a clamp 88 installed at an end of a rod 87 of the return cylinder 86.

The return cylinder 86 may include a hydraulic cylinder. The return cylinder 86 may be installed at a position adjacent to the side wall of the at least one outer column 32.

The clamp 88 may be installed at the end of the rod 87 of the return cylinder 86 and may be configured to selectively grip the mooring chain 42. The clamp 88 may be configured as a claw-type clamp that may selectively grip the mooring chain 42 or as an extendable rod type clamp that may be selectively inserted into the link hole of the mooring chain 42. The clamp 88 may hold the first portion 42a of the mooring chain 42 and move the mooring chain 42 downward.

The mooring chain return actuator 85 may be controlled by a control signal of the control unit 90. The control unit 90 may control the operation of the mooring chain return actuator 85 based on the detection information transmitted from the mooring chain unwound length detection unit 93.

As illustrated in FIG. 6, the control unit 90 may control the clamp 88 to grip the first portion 42a of the mooring chain 42 when the unwound length of the mooring chain 42 exceeds a reference value. After the clamp 88 has gripped the mooring chain 42, as shown in FIG. 7, the control unit 90 may allow the rod 87 of the return cylinder 86 to be extended such that the first portion 42a of the mooring chain 42 is moved downward by the unwound length of the mooring chain 42. The control unit 90 may repeatedly perform the gripping operation of the clamp 88 and the extension operation of the return cylinder 86 as needed.

The GPS 95 may measure a position change of the floating structure 30 and transmit the measured position coordinates to the control unit 90.

The control unit 90 may compare the unwound length of the mooring chain 42 detected by the unwound length detection unit 93 of the mooring chain with the position coordinates of the floating structure 30 measured by the GPS 95 to determine an appropriate movement of the floating structure 30 according to the unwound amount of the mooring chain 42. For example, when the movement of the floating structure 30 compared to the unwound amount of the mooring chain 42 exceeds an appropriate level, a collision with a surrounding floating structure may occur. Therefore, the control unit 90 may determine whether a movement of the floating structure 30 deviates from a target range using the measurement data of the GPS 95.

The wind speed and wind direction sensor 96 may measure wind speed and wind direction information around the floating structure 30 installed offshore, and transmit the measured information to the control unit 90.

The control unit 90 may store the information transmitted from the wind speed and wind direction sensor 96 in the memory 92. The control unit 90 may store tilt information of the floating structure 30 associated with the wind speed and wind direction conditions. The control unit 90 may store tension information on the tension applied to the mooring chain 42 based on information detected by the tension detection unit 80 associated with the wind speed and wind direction conditions.

The display unit 99 may display, to a user, control statuses controlled by the control unit 90, operation statuses, and various types of information of the mooring apparatus 40 through visual, auditory, and tactile manner.

The transceiver unit 98 may be connected by wire or wirelessly to transmit or receive data to or from another external floating structure 30 or a land-based control system 100. Various types of information stored in the memory 92 may be transmitted to the control system 100 through the transceiver unit 98 and monitored by a manager.

The power supply unit 97 may supply electric energy required for the operation of the mooring apparatus 40.

The power supply unit 97 may be provided separately from the power system of the floating structure 30 only to operate the mooring apparatus 40. To this end, the power supply unit 97 may be installed in a position adjacent to the mooring apparatus 40.

The power supply unit 97 may include a power generation unit 97a and a battery 97b. The power generation unit 97a may produce electricity using solar cells, and the produced electricity may be stored in the battery 97b. The power generation unit 97a may produce electricity using wind pressure, and the produced electricity may be stored in the battery 97b. The battery 97b may be electrically connected to various sensors and actuators of the mooring apparatus 40 to supply electricity.

Hereinafter, a method of controlling a mooring apparatus according to an embodiment of the present disclosure will be described.

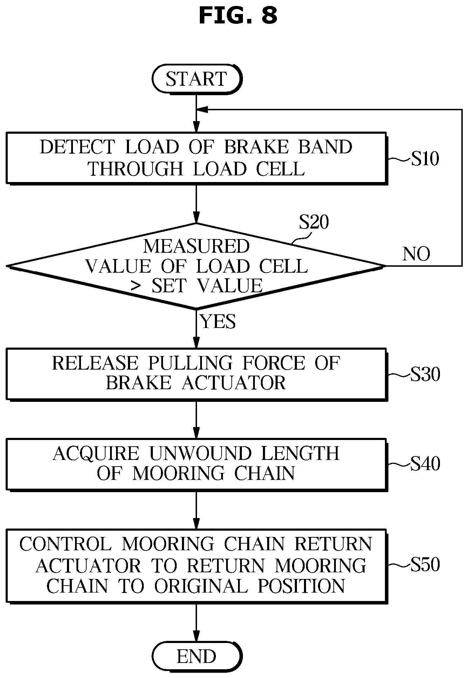

FIG. 8 is a flowchart of a method of controlling a mooring apparatus of a floating structure according to an embodiment disclosed.

Referring to FIG. 8, first, the load of the brake band 60 is detected in real time through the load cell 82 (S10).

Based on the detection information of the load cell 82, it is determined whether the measured value of the load cell 82 exceeds a set value (S20). The set value may be a critical tension of the mooring chain 42 stored in advance.

When the measured value of the load cell 82 exceeds the set value, a control is performed to adjust the pulling force of the brake actuator 70 to unwind the mooring chain 42 from the chain wheel 50 (S30). Here, the brake actuator 70 may release the pulling force of the mooring chain 42 to the extent that the tension applied to the mooring chain 42 does not exceed the critical tension.

The unwound length of the mooring chain 42 is acquired (S40). The unwound length of the mooring chain 42 may be acquired using the angle information of the chain wheel 50 transmitted from the mooring chain unwound length detection unit 93.

Based on the unwound length of the mooring chain 42, the mooring chain return actuator 85 is controlled such that the mooring chain 42 moves to the original position (S50). The mooring chain return actuator 85 may return the mooring chain 42 to the original position by pulling the first portion 42a of the mooring chain 42 downward by the unwound length of the mooring chain 42.

## Claims

1. A mooring apparatus for a floating structure, comprising:
a chain wheel on which a mooring chain is wound;
a brake band surrounding an outer circumference of the chain wheel;
a brake actuator configured to provide a pulling force to the brake band such that the brake band presses the outer circumference of the chain wheel to perform braking;
a tension detection unit configured to measure a tension applied to the brake band;
a control unit configured to control the brake actuator to reduce the pulling force for pulling the brake band when a value measured by the tension detection unit exceeds a set value.

2. The mooring apparatus of claim 1, wherein the tension detection unit includes a load cell connected to one end of the brake band.

3. The mooring apparatus of claim 2, wherein the brake actuator is connected to the other end of the brake band.

4. The mooring apparatus of claim 2, wherein the tension detection unit includes a sensor bracket connected to the brake band, and the load cell is configured to measure a load transmitted to the sensor bracket.

5. The mooring apparatus of claim 3, wherein the brake actuator includes a brake cylinder having a rod configured to move forward and backward, and a plurality of link members having one end connected to the rod of the brake cylinder and the other end connected to the brake band, the plurality of link members configured to pull or release the brake band according to the forward and backward movement of the rod.

6. The mooring apparatus of claim 1, further comprising a mooring chain unwound length detection unit configured to measure a degree to which the mooring chain is wound or unwound.

7. The mooring apparatus of claim 6, wherein the mooring chain unwound length detection unit includes an encoder configured to measure a rotation angle of the chain wheel, and
the control unit is configured to determine an unwound length of the mooring chain based on a value measured by the encoder.

8. The mooring apparatus of claim 1, wherein the floating structure includes at least one outer column, and a chain wheel bracket coupled to a side wall of the at least one outer column, and
the chain wheel is rotatably installed on the chain wheel bracket.

9. The mooring apparatus of claim 8, further comprising a tilt detection unit configured to measure a tilt of the chain wheel bracket.

10. The mooring apparatus of claim 8, further comprising a brake band guide member extending from the chain wheel bracket and configured to support a side of the brake band opposite to a side of the brake band that is in contact with the chain wheel to prevent the brake band from being separated from the chain wheel.

11. The mooring apparatus of claim 8, wherein the mooring chain includes a first portion extending longitudinally from a position adjacent to the at least one outer column, and a second portion wound around the chain wheel and connected to an anchor.

12. The mooring apparatus of claim 11, further comprising a mooring chain return actuator configured to return the mooring chain to an original position in response to unwinding of the mooring chain.

13. The mooring apparatus of claim 12, wherein the mooring chain return actuator is configured to grip the first portion of the mooring chain and move the mooring chain downward.

14. The mooring apparatus of claim 12, wherein the mooring chain return actuator includes a return cylinder, and a clamp installed at an end of a rod of the return cylinder to selectively grip the mooring chain.

15. The mooring apparatus of claim 11, wherein the at least one column is provided with a chain guide member configured to space the first portion of the mooring chain from the at least one column.

16. The mooring apparatus of claim 11, wherein the mooring chain is provided at a lower end thereof with a chain stopper, and
the at least one outer column is provided with a stopper bracket configured to interfere with the chain stopper.

17. The mooring apparatus of claim 8, wherein the brake actuator is positioned on an upper side of the chain wheel bracket,
the brake band extends transversely from a sensor bracket having a load cell, which is installed on the at least one outer column, and is wound around an outer circumference of the chain wheel, and then extends upward to be connected to the brake actuator, and
the brake actuator is configured to suppress rotation of the chain wheel by lifting the brake band upward.

18. A floating-type offshore wind power generator including the mooring apparatus of any one of claims 1 to 17.

19. A method of controlling a mooring apparatus for a floating structure, which includes a brake band connected at one end thereof to a load cell and at the other end thereof to a braking actuator and pulled to provide a chain wheel with a braking force by surrounding an outer circumference of the chain wheel on which a mooring chain is wound, the method comprising:
measuring, by the load cell, a tension applied to the brake band; and
when a value measured by the load cell exceeds a set value, releasing a pulling force of the brake band.

20. The method of claim 19, further comprising:
measuring a rotation angle of the chain wheel, determining an unwound length of the mooring chain based on the measured rotation angle; and
pulling the mooring chain in a direction opposite to an unwound direction of the mooring chain by the unwound length of the mooring chain to return the mooring chain.
